# EUROPÄISCHE PATENTSCHRIFT

(11) **EP 1 384 561 B1**
(45) Veröffentlichungstag und Bekanntmachung des Hinweises auf die Patenterteilung: **26.04.2006**
(21) Anmeldenummer: 03015840.6
(22) Anmeldetag: 11.07.2003
(51) Int. Cl.: B29C 45/27, G01K 7/16

(54) **Temperaturfühler und Heizvorrichtung für Heisskanalsysteme**
Temperature sensor and heating means for hot runner systems
Capteur de température et dispositif de chauffage pour systèmes à canaux chauds

(30) Priorität: 26.07.2002 DE 20211328 U
(43) Veröffentlichungstag der Anmeldung: 28.01.2004
(73) Patentinhaber: Günther GmbH & Co., Metallverarbeitung, 35066 Frankenberg/Eder (DE)
(72) Erfinder: Günther, Herbert, 35108 Allendorf (Eder) (DE)
(74) Vertreter: Olbricht, Karl Heinrich

(56) Entgegenhaltungen:
- WO-A-00/23245
- WO-A-01/54882
- WO-A-02/23143
- WO-A-92/15101
- DE-A- 19 934 110
- DE-A- 19 941 038
- DE-C- 19 934 109

## Beschreibung

Die Erfindung betrifft einen Temperaturfühler für die Verwendung in Heißkanalsystemen gemäß dem Oberbegriff von Anspruch 1 und eine Heizvorrichtung für Heißkanalsysteme mit einem Temperaturfühler gemäß dem Oberbegriff von Anspruch 13.

Heißkanalsysteme werden in Spritzgießwerkzeugen eingesetzt, um eine fließfähige Kunststoffmasse bei einer vorgebbaren Temperatur unter hohem Druck einem trennbaren Werkzeugblock (Formnest) zuzuführen. Damit sich die heiße Masse innerhalb der Verteilerkanäle und der Düsen nicht vorzeitig abkühlt, ist gewöhnlich eine Heizung vorgesehen, welche den flüssigen Kunststoff auf einer konstanten Temperatur halten soll. Die Anforderungen an die Temperaturführung in Heißkanalwerkzeugen sind sehr hoch, weil ein Großteil der zu verarbeitenden Kunststoffe ein sehr enges Verarbeitungsfenster haben und äußerst empfindlich auf Temperaturänderungen, insbesondere im Düsen- und Anschnittbereich, reagieren. So kann beispielsweise eine Temperaturänderung von nur wenigen Grad im Düsenbereich bereits zu Spritzfehlern und Ausschuß führen. Eine präzise Temperaturführung ist daher wichtig für ein gut funktionierendes und vollautomatisch arbeitendes Heißkanalwerkzeug.

Zur Überwachung und Regelung der Temperatur verwendet man gewöhnlich Temperaturfühler in Form von elektrischen Widerstandsleitem (Widerstandsfühler). Diese werden - wie z.B. in EP-A1-0 927 617 oder DE-U-201 00 840 offenbart - als separate Elemente in Nuten bzw. Bohrungen eingebracht, die im Materialrohr oder in einem Heizungsblock vorgesehen sind. Aus DE-A1-199 41 038 oder DE-A1-100 04 072 ist es ferner bekannt, sowohl den Temperaturfühler als auch die gesamte Heizvorrichtung mittels Dickschichttechnologie auszubilden, die mittels Direktbeschichtung auf der Oberfläche des Düsen- oder Verteilerkörpers aufgebracht wird.

Der Widerstandsfühler besitzt gewöhnlich ein U-förmig oder mäanderförmig gestaltetes Widerstandselement aus Metall oder einer Metall-Legierung, das bei steigender oder sinkender Temperatur seinen elektrischen Widerstand ändert. Die damit verbundene Meßmethode hat jedoch den Nachteil, daß trotz sorgfältiger Anordnung des Temperaturfühlers im Heißkanalsystem stets nur ein mittlerer Temperaturwert in einem relativ großen räumlichen Bereich ermittelt werden kann. Entsprechend schwierig ist es, die für eine exakte Temperaturverteilung an oder nahe einem Verteiterende, einer Düsenspitze u.dgl. notwendige Heizleistung einzuregeln. Gerade beim Spritzgießen ist es aber notwendig, die Temperatur an der Düsenspitze genau zu kennen, um diese exakt halten und gegebenenfalls korrigieren zu können.

Aufgabe der Erfindung ist daher, in ausgewählten Bereichen einer Heißkanaldüse, eines Verteilers o.dgl. mit einfachen Maßnahmen eine verbesserte Erfassung und Beeinflussung der Temperatur zu bewirken. Angestrebt wird namentlich eine kontrollierte Regelbarkeit der Betriebstemperatur im Düsenspitzenbereich von Heißkanaldüsen. Ein weiteres wichtiges Ziel der Erfindung besteht darin, eine Heizvorrichtung für Heißkanalsysteme zu schaffen, deren Temperatur in einem definierten, möglichst eng umgrenzten Bereich exakt erfaßbar ist.

Hauptmerkmale der Erfindung sind in Anspruch 1 und Anspruch 13 angegeben. Ausgestaltungen sind Gegenstand der Ansprüche 2 bis 12 und 14 bis 24.

Bei einem Temperaturfühler für die Verwendung in Heißkanalsystemen, mit einem Widerstandselement, das über Anschlußkontakte an eine elektronische Regelschaltung für eine Heizung anschließbar ist, sieht die Erfindung laut Anspruch 1 vor, daß das Widerstandselement entlang seiner Längs- und/oder Querausdehnung wenigstens einen Teilabschnitt aufweist, der einen größeren elektrischen Widerstand aufweist als der übrige Bereich des Widerstandselements. Durch diese ebenso einfache wie kostengünstig zu realisierende Maßnahme läßt sich die Temperatur in einem Verteiler oder einer Heißkanaldüse erheblich genauer erfassen als dies bislang der Fall war.

Dies liegt darin begründet, daß sich eine Temperaturänderung in dem Teilabschnitt des Widerstandselementes mit dem höheren Widerstand erheblich schneller und deutlicher auswirkt als in den übrigen Bereichen des Widerstandselements. Durch geeignete Plazierung des Temperaturfühlers ist es mithin möglich, die Temperaturentwicklung an einer genau definierbaren Stelle besonders exakt zu verfolgen, indem nämlich der Teilabschnitt des Temperaturfühlers mit dem höheren Widerstand in genau diesen Bereich der Heizung bzw. des Heißkanals gelegt wird. Die dort gewonnenen Meßwerte sind mit großer Zuverlässigkeit zur Regelung der Betriebstemperatur und damit des Betriebszustandes des beheizten Körpers auswertbar. Dazu trägt auch Anspruch 2 bei, wenn nämlich das Widerstandselement aus wenigstens einem Abschnitt und wenigstens einem Teilabschnitt besteht, wobei der elektrische Widerstand des Teilabschnitts bei vorgegebener Temperatur größer ist als der elektrische Widerstand des Abschnitts.

Gemäß Anspruch 3 ist der elektrische Widerstand des Teilabschnitts um wenigstens eine Größenordnung größer ist als der elektrische Widerstand des Abschnitts, vorzugsweise um einen Faktor 2 bis 100. Durch eine derartige Sensibilisierung des Temperaturfühlers führt jede Temperaturänderung zu einer sofortigen Widerstandsänderung im Teilabschnitt des Therrnofühlers, d.h. bei einer geeigneten Plazierung dieses Abschnitts, beispielsweise im Bereich der Düsenspitze einer Heißkanaldüse, ist eine erheblich schnellere und bessere Auswertung der Temperatur möglich.

Um den Teilabschnitt mit dem höheren Widerstand optimal anordnen bzw. ausrichten zu können, sieht Anspruch 4 vor, daß der Abschnitt 22 und/oder der Teilabschnitt 24 einen U-förmigen Bogen oder eine Schleife bilden. Beide können laut Anspruch 5 auch mäanderförmig ausgebildet sein, was weitere Gestaltungsmöglichkeiten eröffnet.

Zur Bemessung der Widerstandswerte wählt man die Geometrie des Temperaturfühlers gemäß Anspruch 6 vorteilhaft so, daß der Abschnitt über den Hauptteil der Länge des Temperaturfühlers einen Querschnitt hat, der größer ist als der Querschnitt des Teilabschnitts. Praktisch läßt sich dies nach Anspruch 7 auf einfache Weise dadurch verwirklichen, daß der Abschnitt und der Teilabschnitt eine Widerstandsbahn gleichmäßiger Dicke bilden, wobei die Breite des Abschnitts größer ist als die Breite des Teilabschnitts.

In der Ausbildung von Anspruch 8 ist die Widerstandsbahn eine eingebrannte, leitfähige Paste. Der Abschnitt und/oder der Teilabschnitt können laut Anspruch 9 aber auch von wenigstens zwei übereinander angeordneten Widerstandsbahnen gebildet werden, die durch Isolationsschichten voneinander getrennt sind. Auf diese Weise lassen sich bei geringer Bauhöhe nahezu beliebige Widerstandswerte bilden. Dies gilt auch dann, wenn der Abschnitt und der Teilabschnitt gemäß Anspruch 10 von einer Isolationsschicht abgedeckt oder in eine solche eingebettet sind, wobei die lsolationsschichten in der Ausgestaltung von Anspruch 11 keramische Dielektrikumsschichten sind. Letztere sorgen für eine dauerhaft feste Verbindung zwischen dem Temperaturfühler und der Wandung des zu vermessenden Körpers. Überdies werden die Heizung und der Temperaturfühler wirksam gegen Feuchtigkeitsaufnahme geschützt.

Anspruch 12 sieht ferner vor, daß der Abschnitt und der Teilabschnitt unterschiedliche Materialzusammensetzungen aufweisen. Auch hierdurch lassen sich unterschiedliche Widerstandswerte innerhalb der Widerstandsbahn bilden, was eine räumlich sensibilisierte Erfassung der Temperatur ermöglicht.

Besondere Vorteile bietet die erfindungsgemäße Ausgestaltung von Anspruch 13, für die selbständiger Schutz beansprucht wird. Danach ist der Temperaturfühler Bestandteil einer Heizung und als Meßelement auf oder in dem Verteiler- bzw. Düsenkörper angeordnet.

Die Heizelemente der Heizung sind laut Anspruch 14 dem Leistungsbedarf angepaßte elektrische Heizleiterbahnen, die je nach erforderlicher Leistung und Temperaturverteilung in unterschiedlicher Dichte und Anordnung auf dem Verteiler- oder Düsenkörper aufgebracht sein können. Insbesondere kann man die Heizleiterbahnen gemäß Anspruch 15 zumindest abschnittsweise mäanderförmig und/oder bifilar führen.

Die Weiterbildung von Anspruch 16 sieht vor, daß der elektrische Widerstand der Heizleiterbahnen in einem mittleren Bereich des Verteiler- oder Düsenkörpers kleiner ist als im Kopfbereich oder im End- bzw. Spitzenbereich. Man kann also die Mitte des Verteiler- oder Düsenkörpers zur Ausbildung einer gezielten Temperaturverteilung energetisch entlasten. In jedem Fall ergibt sich eine Konzentration zu den Enden hin, beispielsweise nahe der Ein- oder Austrittsöffnung in dem Verteiler- oder Düsenkörper.

Speziell bilden hier die Heizleiterbahnen nach Anspruch 17 wenigstens eine Zone, deren elektrischer Widerstand größer ist als der elektrische Widerstand des übrigen Bereichs der Heizleiteibahnen, wobei der Temperaturfühler mit seinem sensibilisierten Teilabschnitt in eine Ausnehmung der Heizleiter-Zone hohen Widerstands ragt, also sehr nahe an das freie Ende des Düsen- bzw. Verteilerkörpers geführt werden kann. Temperaturänderungen in diesem kritischen Bereich werden unmittelbar erfaßt, so daß Spritzfehlern wirksam vermieden werden. Dazu trägt auch Anspruch 18 bei, wenn nämlich der Thermofühler-Abschnitt in der Zone hohen Widerstands von dicht nebeneinanderliegenden Heizleiterbahnen umschlossen ist.

Zweckmäßig sind die Heizleiterbahnen nach Anspruch 19 auf einer Isolierschicht aufgebracht und von einer weiteren Isolierschicht abgedeckt. Anspruch 20 sieht ferner vor, daß der Temperaturfühler und die Heizleiterbahnen in gleicher Ebene auf der Isolierschicht aufgebracht sind. Selbst geringe Bauhöhen lassen sich hierdurch problemlos einhalten.

Gemäß Anspruch 21 sind die Heizleiterbahnen und die Isolationsschichten eingebrannte Folien und/oder eingebrannte Dickschichtpasten, wobei zumindest die Isolierschicht laut Anspruch 22 eine keramische Dielektrikumsschicht ist. Die gesamte Heizung läßt sich daher - gemeinsam mit dem Temperaturfühler - auf einfache Weise kostengünstig herstellen. Die entstehende integrale Verbindung zwischen Düsen- bzw. Verteilerkörper gewährleistet zudem einen stets optimalen Wärmeübergang.

Dazu trägt auch Anspruch 23 bei, wenn nämlich die Dielektrikumsschicht unlösbar auf dem Verteiler- oder Düsenkörper aufgebracht ist und nach wenigstens einem Einbrennprozeß gegenüber diesem unter Druckvorspannung steht. Durch die hierdurch entstehende flächige Verbindung bzw. Anordnung der Heizung weist beispielsweise eine Heißkanaldüse im Vergleich zu herkömmlichen Bauformen bei nahezu gleichen Leistungsmerkmalen äußerst kompakte Abmessungen auf.

Alternativ kann die Dielektrikumsschicht in Einklang mit Anspruch 24 unlösbar auf einem Tragkörper aufgebracht sein, der mit thermischem Kontakt auf oder an dem Verteiler- oder Düsenkörper festlegbar ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:
- Fig. 1: eine Frontansicht einer Heizvorrichtung mit Heizleiterbahnen und einem Temperaturfühler,
- Fig. 2: eine Draufsicht auf einen Temperaturfühler,
- Fig. 3: eine Schnittansicht entlang der Linie A-A in Fig. 2,
- Fig. 4: eine andere Ausführungsform eines Temperaturfühlers,
- Fig. 5: eine andere Ausführungsform einer Heizvorrichtung mit einem Temperaturfühler und
- Fig. 6: eine weitere Ausführungsform einer Heizvorrichtung mit einem Temperaturfühler.

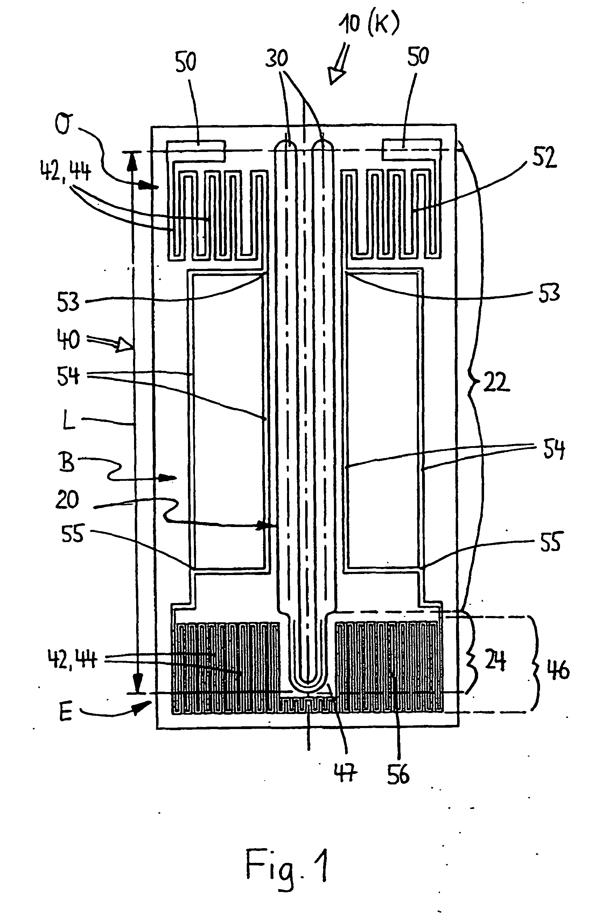

Der in Fig. 1 allgemein mit 10 bezeichnete Temperaturfühler ist Bestandteil einer Heizvorrichtung 40 für ein (nicht näher dargestelltes) Heißkanalsystem, insbesondere für eine (ebenfalls nicht gezeigte) Heißkanaldüse. Er hat ein Widerstandselement 20 aus einem Material, das bei steigender oder sinkender Temperatur seinen elektrischen Widerstand ändert. Auf dieser Basis läßt sich über eine geeignete (nicht dargestellte) elektronische Schaltung die von der Heizvorrichtung 40 erzeugte Temperatur erfassen und entsprechend regeln.

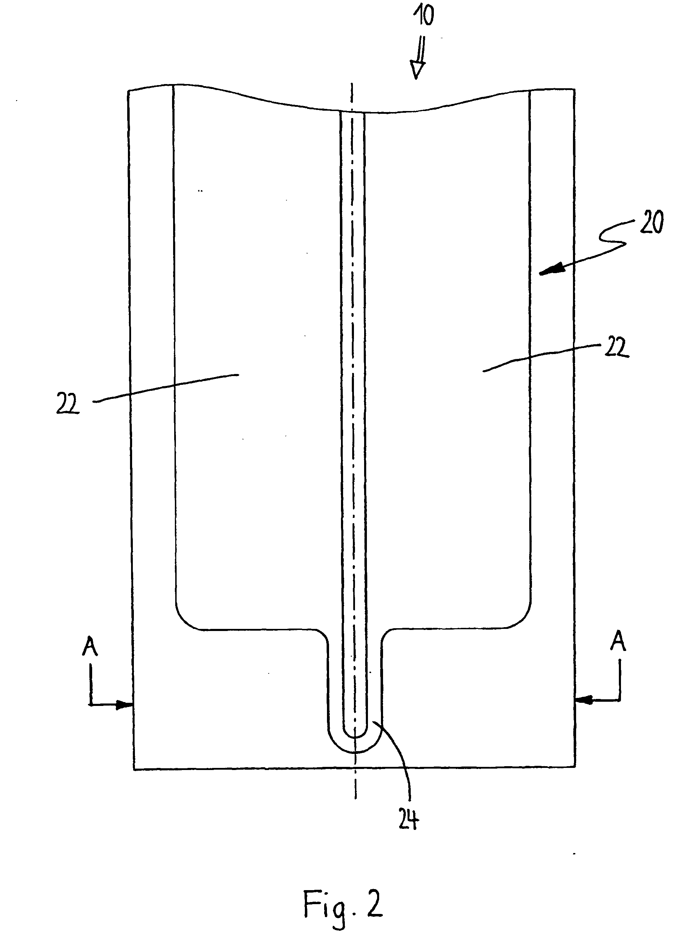

Das Widerstandselement 20 erstreckt sich im wesentlichen in Längsrichtung der Heißkanaldüse bzw. der Heizung 40. Es ist in drei Abschnitte 22, 24, 22 unterteilt, die gemeinsam eine relativ schmale U-förmige Schleife bilden. Die Abschnitte 22 bilden zwei identische Widerstandsschenkel, die im wesentlichen parallel zum Düsenkörper K der Heißkanaldüse verlaufen. Sie sind an ihrem unteren Ende über einen Teilabschnitt 24 miteinander verbunden. Der elektrische Widerstand dieses Teilabschnitts 24 ist bei vorgegebener Temperatur um einen Faktor 2 bis 100 größer als der elektrische Widerstand der Abschnitte 22. Dies wird beispielsweise dadurch erreicht, daß jeder Abschnitt 22 einen Querschnitt hat, der wenigstens zweimal so groß ist wie der Querschnitt des Teilabschnitts 24. Bevorzugt bilden jedoch die Abschnitte 22 und der Teilabschnitt 24 eine insgesamt U-förmige Widerstandsbahn gleichmäßiger Dicke. Deren Breite ist - wie Fig. 2 zeigt - im Bereich der Abschnitte 22 größer als im Bereich des Teilabschnitts 24. Die Länge L des Temperaturfühlers 10 bzw. des Widerstandselements 20 entspricht in etwa der Länge des Düsenkörpers K der Heißkanaldüse.

Für den Anschluß des Temperaturfühlers 10 an die elektronische Auswerte- bzw. Regelschaltung sind Anschlußkontakte 30 vorgesehen, die z.B. als Lötkontakte ausgebildet sein können. An diesen Lötkontakten 30 werden Anschlußdrähte oder -leitungen befestigt, die über den Düsenkörper oder einen Anschlußflansch nach außen geführt sind.

Die Heizvorrichtung 40 besitzt in einer bevorzugten Anordnung Heizelemente 42, die als elektrische Heizleiterbahnen 44 ausgebildet sind. In einem Kopfbereich O, beispielsweise vor einem (nicht gezeigten) Sockel oder Flansch der Heißkanaldüse, sitzen Anschlüsse 50 zu einem Mäanderband 52, dessen parallele Heizleiterbahnen zueinander Abstände haben, die etwa der Breite einer einzelnen Bahn entspricht. An Verzweigungen 53 geht das obere Band 52 in rahmenartig verlaufende Stränge oder Längsteiter 54 über, die sich über einen Mittelbereich B der Heizvorrichtung 40 bzw. des Düsenkörpers K erstrecken. An ihrem unteren Ende laufen die Längsleiter bzw. Stränge 54 in Zusammenführungen 55 aus, die im End- bzw. Spitzenbereich E des Düsenkörpers K, insbesondere im Bereich einer (nicht dargestellten) Düsenspitze, zu einem unteren Mäanderband 56 führen. Die Breite der Leiterbahnen 44 im oberen Mäanderband 52 und im Bereich der Stränge bzw. Längsleiter 54 ist größer als die Breite der Leiterbahnen 44 im unteren Mäanderband 56, so daß dessen elektrischer Widerstand größer ist als im übrigen Bereich der Heizleiterbahnen 44. Hierdurch wird die Heizleistung im Bereich E der Düsenspitze(n) konzentriert.

Man erkennt in Fig. 1, daß die Heizleiteranordnung 42, 44 symmetrisch gestaltet ist und mit gegengleichen Hälften den zentrisch angeordneten Temperaturfühler 10 umgibt. Dieser bildet mit seinem Teilabschnitt 24 eine haamadelartige Schleife, die einen besonders empfindlichen Meßbereich bildet. Letzterer liegt umgeben von den dicht nebeneinanderliegenden Heizleiterbahnen 44 des unteren Mäanderbandes 56 in einer Ausnehmung 47 der Heizleiter-Zone 46 hohen Widerstandes und damit im Bereich E der Düsenspitze(n) der Heißkanaldüse, so daß sich hier jede Temperaturänderung besonders stark auf das Widerstandselement 20 auswirkt.

Die Heizleiterbahnen 42, 44 der Heizvorrichtung 40 sind als Flachbahnen gleichmäßiger Stärke von z.B. 0.02 bis 0,5 mm ausgeführt. Sie bestehen vorzugsweise aus leitfähigen Folien oder Pasten, die auf einer zuvor auf dem Verteiler- bzw. Düsenkörper K unlösbar aufgebrachten Isolierschicht 52 eingebrannt werden. Letztere ist bevorzugt eine keramische Dielektrikumsschicht, die nach wenigstens einem Einbrennprozeß gegenüber dem Verteiler- bzw. Düsenkörper K unter Druckvorspannung steht. Das Widerstandselement 20 des Temperaturfühlers 10 wird ebenfalls in Dickschichttechnik auf der Dielektrikumsschicht 58 aufgebracht und zwar bevorzugt in derselben Ebene wie die Heizleiterbahnen 42, 44. Der Temperaturfühler 10 besteht beispielsweise aus Platin oder einer anderen geeigneten Metall-Legierung, deren Widerstand sich mit der Temperatur ändert. Eine weitere Isolierschicht 59 schützt die Heizung 40 und den Temperaturfühler 10 gegen Einflüsse von außen. Letztere bilden gemeinsam einen Schichtverbund, der auf einer ebenen Seitenfläche oder auf einer zylindrischen Mantelfläche der Heißkanaldüse aufgebracht sein kann.

Durch die Ausbildung und Anordnung eines gesonderten Teilabschnitts 24 des Widerstandselements 20 im temperaturempfindlichen End- bzw. Spitzenbereich E der Heißkanaldüse läßt sich die dortige Wärmeentwicklung exakt und zeitnah erfassen. Eine Abweichung der Soll-Temperatur führt dadurch erheblich schneller und deutlicher zu einer Widerstandsänderung im erfindungsgemäßen Temperaturfühler 10 als bei herkömmlichen Ausführungen, d.h. Sollabweichungen der Temperatur lassen sich rasch und präzise erfassen; die Heizung 40 kann sofort gezielt nachgeregelt werden.

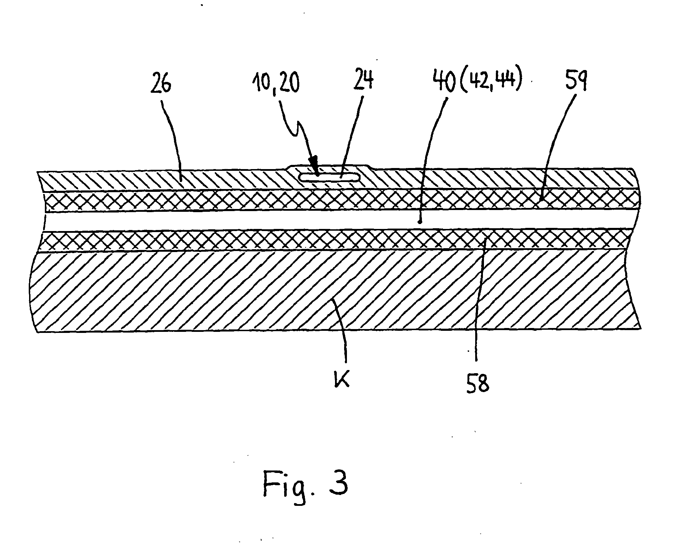

Fig. 3 zeigt einen Querschnitt des Temperaturfühlers 10 von Fig. 2. Die Heizung 40 ist auf der Außenwandung des z.B. zylindrischen Düsenkörpers K ausgebildet. Sie ist als Flachschichtheizung ausgebildet mit einer unmittelbar auf dem Metall aufgebrachten keramischen Dielektrikumsschicht 58 als Isolationsschicht, einer darüber aufgedruckten Heizschicht 42, die - wie in Fig. 1 dargestellt - mäanderförmige und/oder rahmenförmige Heizleiterbahnen 44 aufweisen kann, und mit einer äußeren Abdeckschicht 59, welche die Heizleiterbahnen 44 und die darunter liegende Dielektrikumsschicht 58 nach außen hin abdeckt und elektrisch isoliert. Über der Abdeckschicht 59 ist eine weitere Isolationsschicht 26 aufgebracht, in die der Temperaturfühler 10 eingebettet ist.

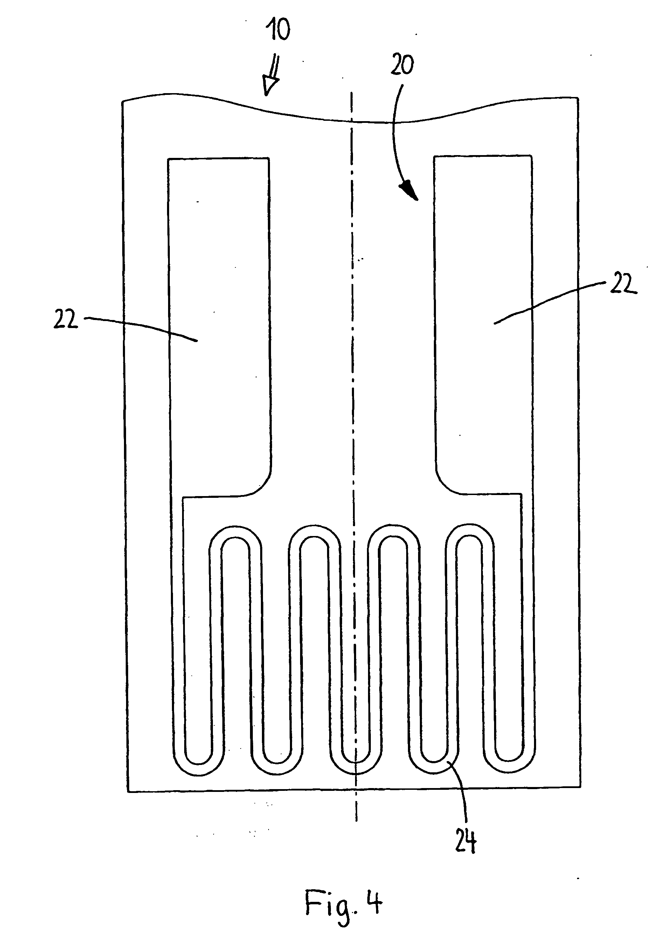

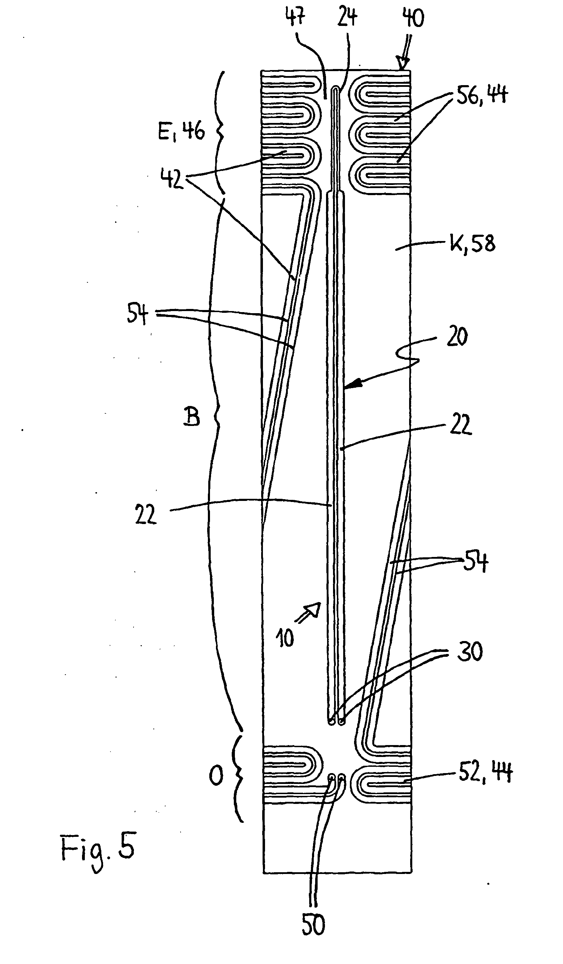

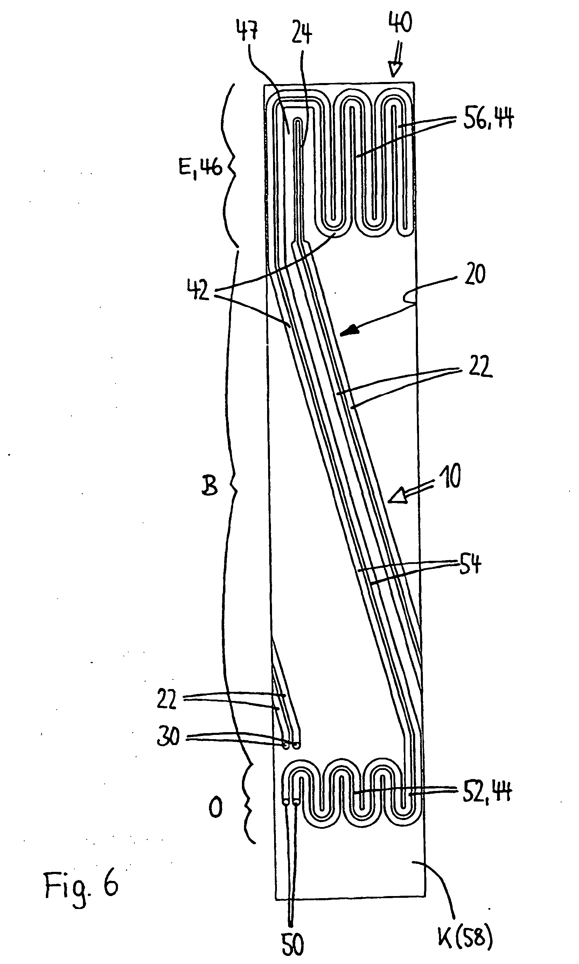

In der Ausführungsform von Fig. 4 ist der Teilabschnitt 24 des Temperaturfühlers mäanderförmig ausgebildet. Er bildet auch hier einen besonders sensiblen Meßabschnitt, der in einem Bereich auf der Heißkanaldüse angeordnet ist, dessen Temperatur möglichst zeitnah erfaßt werden muß. Die Fig. 5 und 6 zeigen je eine alternative Möglichkeit sowohl für die Gestaltung der Heizleiterbahnen 44 als auch für Anordnung und Lage des Temperaturfühlers 10, der mit seiner Meßspitze 24 stets im gewünschten Meßbereich für die Temperaturmessung liegt.

Die Erfindung ist nicht auf eine der vorbeschriebenen Ausführungsformen beschränkt, sondern in vielfältiger Weise abwandelbar. So können der Abschnitt 22 und der Teilabschnitt 24 des Temperaturfühlers 10 von wenigstens zwei übereinander angeordneten Widerstandsbahnen 20 gebildet sein, die durch dünne Isolationsschichten voneinander getrennt sind. Auf diese Weise lassen sich bei Bedarf höhere Widerstandswerte erzielen, die beispielsweise zum Messen höherer Temperaturen notwendig sind. Wichtig ist auch hierbei, daß der Widerstandswert des Widerstandselements 20 in dem Bereich, in dem Temperaturänderungen zeitnah und präzise zu erfassen sind, deutlich höher ist als in den übrigen Bereichen der Widerstandsbahnen 20, namentlich insgesamt um einen Faktor 2 bis 100. Der Thermofühler 10 erfaßt und beeinflußt dadurch Temperaturanderungen in ausgewählten Bereichen mit geringster thermischer Verzögerung.

Zweckmäßig hat die gesamte Vorrichtung, die auf einem leitenden- Verteiler- oder Dusenkorper isoliert anbringbar ist, eine einheitliche Dicke, was eine Dickschicht-Einbettung leicht und zuverlässig ermöglicht. Die Dickschicht kann in an sich bekannter Weise eingebrannt werden, wobei das glaskeramische Materialsystem wenigstens ein vörgebildetes Glas, eine Glaskeramik oder eine Keramik enthält, welches bei der jeweiligen Einbrenntemperatur die Metalloberfläche benetzt und dabei zumindest teilweise in den kristallinen Zustand übergeht.

### Bezugszeichenliste

- B: mittlerer Bereich
- E: End-/Spitzenbereich
- K: Verteiler-/Düsenkörper
- L: Länge
- O: Kopfbereich

- 10: Temperaturfühler
- 20: Widerstandselement
- 22: Abschnitt
- 24: Teilabschnitt
- 26: Isolationsschicht
- 30: Anschlußkontakt

- 40: Heizung/Heizvorrichtung
- 42: Heizelement
- 44: Heizleiterbahn
- 46: Zone
- 47: Ausnehmung

- 50: Anschlüsse
- 52: Mäanderband
- 53: Verzweigung
- 54: Längsleiter
- 55: Zusammenführung
- 56: Mäanderband

- 58: Isolationsschicht
- 59: Isolationsschicht

## Patentansprüche

1. Temperaturfühler (10) für die Verwendung in Heißkanalsystemen, mit einem Widerstandselement (20), das über Anschlußkontakte (30) an eine Regelschaltung für eine Heizung (40) anschließbar ist, **dadurch gekennzeichnet, daß** das Widerstandselement (20) entlang seiner Längs- und/oder Querausdehnung wenigstens einen Teilabschnitt (24) aufweist, der einen größeren elektrischen Widerstand aufweist als der übrige Bereich (22) des Widerstandselements (20).

2. Temperaturfühler nach Anspruch 1, **dadurch gekennzeichnet, daß** das Widerstandselement (20) aus wenigstens einem Abschnitt (22) und wenigstens einem Teilabschnitt (24) besteht, wobei der elektrische Widerstand des Teilabschnitts (24) bei vorgegebener Temperatur größer ist als der elektrische Widerstand des Abschnitts (22).

3. Temperaturfühler nach Anspruch 1 oder 2, **dadurch gekennzeichnet, daß** der elektrische Widerstand des Teilabschnitts (24) um wenigstens eine Größenordnung größer ist als der elektrische Widerstand des Abschnitts (22), vorzugsweise um einen Faktor 2 bis 100.

4. Temperaturfühler nach einem der Ansprüche 1 bis 3, **dadurch gekennzeichnet, daß** der Abschnitt (22) und/oder der Teilabschnitt (24) einen U-förmigen Bogen oder eine Schleife bilden.

5. Temperaturfühler nach einem der Ansprüche 1 bis 4, **dadurch gekennzeichnet, daß** der Abschnitt (22) und/oder der Teilabschnitt (24) zumindest abschnittsweise mäanderförmig ausgebildet sind.

6. Temperaturfühler nach einem der Ansprüche 1 bis 5, **dadurch gekennzeichnet, daß** der Abschnitt (22) über den Hauptteil der Länge (L) des Temperaturfühlers (10) einen Querschnitt hat, der größer ist als der Querschnitt des Teilabschnitts (24).

7. Temperaturfühler nach einem der Ansprüche 1 bis 6, **dadurch gekennzeichnet, daß** der Abschnitt (22) und der Teilabschnitt (24) eine Widerstandsbahn gleichmäßiger Dicke bilden, wobei die Breite des Abschnitts (22) größer ist als die Breite des Teilabschnitts (24).

8. Temperaturfühler nach Anspruch 7, **dadurch gekennzeichnet, daß** die Widerstandsbahn von einer eingebrannten, leitfähigen Paste gebildet ist.

9. Temperaturfühler nach einem der Ansprüche 1 bis 8, **dadurch gekennzeichnet, daß** der Abschnitt (22) und/oder der Teilabschnitt (24) von wenigstens zwei übereinander angeordneten Widerstandsbahnen gebildet sind, die durch lsolationsschichten voneinander getrennt sind.

10. Temperaturfühler nach einem der Ansprüche 1 bis 9, **dadurch gekennzeichnet, daß** der Abschnitt (22) und der Teilabschnitt (24) von einer lsolationsschicht (26) abgedeckt oder in eine solche eingebettet sind.

11. Temperaturfühler nach Anspruch 9 oder 10, **dadurch gekennzeichnet, daß** die lsolationsschichten keramische Dielektrikumsschichten sind.

12. Temperaturfühler nach einem der Ansprüche 1 bis 11, **dadurch gekennzeichnet, daß** der Abschnitt (22) und der Teilabschnitt (24) unterschiedliche Materialzusammensetzungen aufweisen.

13. Heizvorrichtung (40) für Heißkanalsysteme, mit einer Anordnung von Heizelementen (42), die in thermischem Kontakt zu einem Verteiler- oder Düsenkörper (K) stehen, und mit einem Temperaturfühler (10) nach einem der Ansprüche 1 bis 12, **dadurch gekennzeichnet, daß** der Temperaturfühler (10) ein auf oder in dem Verteiler- bzw. Düsenkörper (K) angeordnetes Meßelement ist.

14. Heizvorrichtung nach Anspruch 13, **dadurch gekennzeichnet, daß** die Heizelemente (42) dem Leistungsbedarf angepaßte elektrische Heizleiterbahnen (44) sind.

15. Heizvorrichtung nach Anspruch 13 oder 14, **dadurch gekennzeichnet, daß** die Heizleiterbahnen (44) zumindest abschnittsweise mäanderförmig und/oder bifilar geführt sind.

16. Heizvorrichtung nach Anspruch 14 oder 15, **dadurch gekennzeichnet, daß** der elektrische Widerstand der Heizleiterbahnen (44) in einem mittleren Bereich (B) des Verteiler- oder Düsenkörpers (K) kleiner ist als im Kopfbereich (O) oder im End- bzw. Spitzenbereich (E).

17. Heizvorrichtung nach einem der Ansprüche 14 bis 16, **dadurch gekennzeichnet, daß** die Heizleiterbahnen (44) im End- bzw. Spitzenbereich (E) des Verteiler- oder Düsenkörpers (K) wenigstens eine Zone (46) aufweisen oder bilden, deren elektrischer Widerstand größer ist als der elektrische Widerstand des übrigen Bereichs der Heizleiterbahnen (44), wobei der Temperaturfühler (10) mit seinem Teilabschnitt (24) in eine Ausnehmung (47) der Heizleiter-Zone (46) hohen Widerstands ragt.

18. Heizvorrichtung nach Anspruch 17, **dadurch gekennzeichnet, daß** der Thermofühler-Abschnitt (24) in der Zone (46) hohen Widerstands von dicht nebeneinanderliegenden Heizleiterbahnen (44) umschlossen ist.

19. Heizvorrichtung nach einem der Ansprüche 14 bis 18, **dadurch gekennzeichnet, daß** die Heizleiterbahnen (44) auf einer Isolierschicht (58) aufgebracht und von einer weiteren Isolierschicht (59) abgedeckt sind.

20. Heizvorrichtung nach Anspruch 19, **dadurch gekennzeichnet, daß** der Temperaturfühler (10) und die Heizleiterbahnen (44) in gleicher Ebene auf der Isolierschicht (58) aufgebracht sind.

21. Heizvorrichtung nach Anspruch 19 oder 20, **dadurch gekennzeichnet, daß** die Heizteiterbahnen (44) und die lsolationsschichten (26, 58, 59) eingebrannte Folien und/oder eingebrannte Dickschichtpasten sind.

22. Heizvorrichtung nach einem der Ansprüche 19 bis 21, **dadurch gekennzeichnet, daß** zumindest die Isolierschicht (58) eine keramische Dielektrikumsschicht ist.

23. Heizvorrichtung nach einem der Ansprüche 19 bis 22, **dadurch gekennzeichnet, daß**, die Dielektrikumsschicht (58) unlösbar auf dem Verteiler- oder Düsenkörper (K) aufgebracht ist und nach wenigstens einem Einbrennprozeß gegenüber diesem unter Druckvorspannung steht.

24. Heizvorrichtung nach einem der Ansprüche 19 bis 23, **dadurch gekennzeichnet, daß**, die Dielektrikumsschicht (58) unlösbar auf einem Tragkörper aufgebracht ist, der mit thermischem Kontakt auf oder an dem Verteiler- oder Düsenkörper (K) festlegbär ist.

## Claims

1. Temperature sensor (10) for use in hot runner systems, comprising a resistance element (20) adapted for connection to a control circuit of a heating system (40) by connection contacts (30), wherein the resistance element (20) has at least one sub-segment (24) along its longitudinal or cross-segmental extension which sub-segment has a greater electric resistance than the remaining area (22) of the resistance element (20).

2. Temperature sensor according to claim 1, wherein the resistance element (20) consists of at least one segment (22) and at lest one sub-segment (24), the electric resistance of the sub-segment (24) being greater, at a pra-defiermined temperature, than the electric resistance of the segment (22).

3. Temperature sensor according to claim 1 or claim 2, wherein the electric resistance of the sub-segment (24) exceeds the electric resistance of the segment (22) by at least one order of magnitude, preferably by a factor of 2 to 100.

4. Temperature sensor according to any one of claims 1 to 3, wherein the segment (22) and/or the sub-segment (24) form a U-shaped arc or a loop.

5. Temperature sensor according to any one of claims 1 to 4, wherein the segment (22) and/or the sub-segment (24) are at least in part of meandering shape.

6. Temperature sensor according to any one of claims 1 to 5, wherein over the major portion of the length (L) of the temperature sensor (10), the segment (22) has a cross-segmental dimension which is greater than the cross-sectional dimension of the sub-segment (24).

7. Temperature sensor according to any one of the 1 to 6, wherein the segment (22) and sub-segment (24) form a resistive path of uniform thickness, the width of the segment (22) being greater than the width of the sub-segment (24).

8. Temperature sensor according to claim 7, wherein the resistive path consists of a fired conductive paste.

9. Temperature sensor according to any one of claims 1 to 8, wherein the segment (22) and/or the sub-segment (24) are formed by at least two resistive paths arranged one above the other, these being separated by insulating layers.

10. Temperature sensor according to any one of claims 1 to 9, wherein the segment (22) and the sub-segment (24) are covered by or imbedded in an insulating layer (26).

11. Temperature sensor according to claim 9 or claim 10, wherein the insulating layers are ceramic dielectric layers.

12. Temperature sensor according to any one of claims 1 to 11, wherein the segment (22) and the sub-segment (24) have different material compositions.

13. Heating device (40) for hot runner systems, comprising a configuration of heating elements (42) which are in thermal contact with a manifold or nozzle body (K), and comprising a temperature sensor (10) according to any one of claims 1 to 12, wherein the temperature sensor (10) is a measuring element located on or in the manifold or nozzle body (K).

14. Heating device according to claim 13, wherein the heating elements (42) consist of electrical heat conducting paths (44) adapted to performance requirements.

15. Heating device according to claim 13 or daim 14, wherein the heat conducting paths (44) are at least partially in meandering form and/or bifilar.

16. Heating device according to claim 14 or claim 15, wherein in an Intermediate section (B) of the manifold or nozzle body (K), the electric resistance of the heat conducting paths (44) is lower than in the top area (O) or in an end or tip area (E).

17. Heating device according to any one of claims 14 to 16, wherein in an end area or tip area (E) of the manifold or nozzle body (K), the heat conducting paths (44) have or form at least one zone (46) whose electric resistance exceeds that of the remainder of the heat conducting paths (44), with the sub-segment (24) of the temperature sensor (10) reaching into a recess (47) of the high-resistance heat conductor zone (46).

18. Heating device according to claim 17, wherein in the high-resistance zone (46), the thermal sensor segment (24) is surrounded by closely grouped heat conducting paths (44).

19. Heating device according to any one of claims 14 to 18, wherein the heat conducting paths (44) are applied to an insulating layer (58) and are covered by a further insulating layer (59).

20. Heating device according to claim 19, wherein the temperature sensor (10) and the heat conducting paths (44) are applied at the same level to the insulating layer (58).

21. Heating device according to claim 19 or claim 20, wherein the heat conducting paths (44) and the Insulating layers (26, 58, 59) consist of fired fioils and/or fired thick-film pastes.

22. Heating device according to any one of claims 19 or 21. wherein at least the insulating layer (58) is a ceramic dielectric layer.

23. Heating device according to any one of claims 19 to 22, wherein the dielectric coating (58) is permanently applied to the manifold or nozzle body (K) and is, after at least one firing process, pre-stressed In relation to said body.

24. Heating device according to any one of claims 19 to 23, wherein the dielectric coating (58) is non-detachably applied to a base element adapted to be adhered to the manifold or nozzle body (K) with thermal contact.

## Revendications

1. Capteur de température (10) prévu pour une utilisation dans des systèmes à canaux chauds, avec un élément de résistance (20) qui, par l'intermédiaire de contacts de raccordement (30), peut être connecté à un circuit de réglage d'un chauffage (40), **caractérisé en ce que** l'élément de résistance (20) a le long de son étendue longitudinale et/ou latérale au moins une section partielle (24) qui présente une résistance électrique plus grande que la section restante (22) de l'élément de résistance (20).

2. Capteur de température selon la revendication 1, **caractérisé en ce que** l'élément de résistance (20) consiste en au moins une section (22) et une section partielle (24), la résistance électrique de la section partielle (24) étant, à une température donnée, plus grande que la résistance électrique de la section (22).

3. Capteur de température selon la revendication 1 ou 2, **caractérisé en ce que** la résistance électrique de la section partielle (24) est plus grande que la résistance électrique de la section (22) d'au moins un ordre de grandeur, de préférence d'un facteur allant de 2 à 100.

4. Capteur de température selon l'une des revendications 1 à 3, **caractérisé en ce que** la section (22) et/ou la section partielle (24) forment un arc en U ou une boucle.

5. Capteur de température selon l'une des revendications 1 à 4, **caractérisé en ce qu'**au moins par secteurs, la section (22) et/ou la section partielle (24) sont conçues en forme de méandres.

6. Capteur de température selon l'une des revendications 1 à 5, **caractérisé en ce que** sur la partie principale de la longueur (L) du capteur de température (10), la section (22) a une section transversale qui est plus grande que la section transversale de la section partielle (24).

7. Capteur de température selon l'une des revendications 1 à 6, **caractérisé en ce que** la section (22) et la section partielle (24) forment une bande de résistance d'une épaisseur régulière, la largeur de la section (22) étant plus grande que la largeur de la section partielle (24).

8. Capteur de température selon la revendication 7, **caractérisé en ce que** la bande de résistance est formée par une pâte cuite conductible.

9. Capteur de température selon l'une des revendications 1 à 8, **caractérisé en ce que** la section (22) et/ou la section partielle (24) sont formées par au moins deux bandes de résistance disposées l'une au-dessus de l'autre et séparées par des couches isolantes.

10. Capteur de température selon l'une des revendications 1 à 9, **caractérisé en ce que** la section (22) et la section partielle (24) sont recouvertes par une couche Isolante (26) ou qu'elles y sont encastrées.

11. Capteur de température selon la revendication 9 ou 10, **caractérisé en ce que** les couches isolantes sont des couches céramiques diélectriques.

12. Capteur de température selon l'une des revendications 1 à 11, **caractérisé en ce que** la section (22) et la section partielle (24) sont consituées de matériaux différents.

13. Dispositif de chauffage (40) pour systèmes à canaux chauds, avec un arrangement d'éléments de chauffage (42) qui sont en contact thermique avec un corps de distribution ou de buses (K), et avec un capteur de température (10) selon l'une des revendications 1 à 12, **caractérisé en ce que** le capteur de température (10) est un élément de mesure disposé sur ou dans le corps de distribution ou de buses (K).

14. Dispositif de chauffage selon la revendication 13, **caractérisé en ce que** les éléments de chauffage (42) sont des conduites électriques de chauffage (44) adaptées à la capacité requise,

15. Dispositif de chauffage selon la revendication 13 ou 14, **caractérisé en ce que** les conduites de chauffage (44) sont, au moins par secteurs, agencées en méandres et/ou bifilaires.

16. Dispositif de chauffage selon la revendication 14 ou 15, **caractérisé en ce que** la résistance électrique des conduites de chauffage (44) est plus petite dans un secteur central (B) du corps de distribution ou de buses (K) que dans le secteur de tête (O) ou dans le secteur terminal ou extrême (E).

17. Dispositif de chauffage selon l'une des revendications 14 à 16, **caractérisé en ce que** les conduites de chauffage (44), dans le secteur terminal ou extrême (E) du corps de distribution ou de buses (K), ont ou forment au moins une zone (46) dont la résistance électrique est plus grande que la résistance électrique du secteur restant des conduites de chauffage (44), le capteur de température (10) s'étendant avec sa section partielle (24) dans un évidement (47) de la zone (46) des conduites de chauffage ayant une grande résistance.

18. Dispositif de chauffage selon la revendication 17, **caractérisé en ce que** la section du palpeur thermique (24), dans la zone de grande résistance (46), est entourée de conduites de chauffage (44) placées étroitement les unes à côté des autres.

19. Dispositif de chauffage selon l'une des revendications 14 à 18, **caractérisé en ce que** les conduites de chauffage (44) ont été appliquées sur une couche isolante (58) et qu'elles sont recouvertes par une autre couche isolante (59).

20. Dispositif de chauffage selon la revendication 19, **caractérisé en ce que** le capteur de température (10) et les conduites de chauffage (44) ont été appliqués sur la couche isolante (58), sur un même plan.

21. Dispositif de chauffage selon la revendication 19 ou 20, **caractérisé en ce que** les conduites de chauffage (44) et les couches isolantes (26, 58, 59) sont des feuilles cuites et/ou des des pâtes pour couches épaisses cuites.

22. Dispositif de chauffage selon l'une des revendications 19 à 21, **caractérisé en ce qu'**au moins la couche Isolante (58) est une couche céramique diélectrique.

23. Dispositif de chauffage selon l'une des revendications 19 à 22, **caractérisé en ce que** la couche diélectrique (58) a été appliquée de manière indétachable sur le corps de distribution ou de buses (K), et **en ce qu'**après au moins un processus de cuisson, cette couche se trouve sous prétension de pression par rapport à ce corps.

24. Dispositif de chauffage selon l'une des revendications 19 à 23, **caractérisé en ce que** la couche diélectrique (58) a été appliquée de manière Indétachable sur un corps de support, lequel peut être fixé sur ou près du corps de distribution ou de buses (K), avec un contact thermique.
